# EUROPEAN PATENT SPECIFICATION

(11) **EP 2 987 562 B1**
(45) Date of publication and mention of the grant of the patent: **11.05.2022**
(21) Application number: 15180830.0
(22) Date of filing: 12.08.2015
(51) Int. Cl.: B33Y 80/00, B64D 45/02, B05D 5/12, B29C 73/02

(54) **METHODS AND APPARATUS FOR USE IN FORMING A LIGHTNING PROTECTION SYSTEM**
VERFAHREN UND VORRICHTUNG ZUR VERWENDUNG BEI DER HERSTELLUNG EINES BLITZSCHUTZSYSTEMS
PROCÉDÉS ET APPAREIL POUR UNE UTILISATION DANS LA FORMATION D'UN SYSTÈME DE PROTECTION CONTRE LA FOUDRE

(30) Priority: 18.08.2014 US 201414461966
(43) Date of publication of application: 24.02.2016
(73) Proprietor: The Boeing Company, Chicago, IL 60606-1596 (US)
(72) Inventor: BROWN, Arlene M., Chicago, IL Illinois 60606 (US); HUMFELD, Keith Daniel, Chicago, IL Illinois 60606 (US)
(74) Representative: Morrall, Jonathan Ian McLachlan

(56) References cited:
- EP-A1- 2 704 539
- GB-A- 2 433 467
- US-A1- 2009 092 844
- None

## Description

### BACKGROUND

The field of the present disclosure relates generally to lightning protection systems and, more specifically, to lightning protection systems applied to structures via additive manufacturing techniques.

At least some known aircraft are vulnerable to lightning strikes under certain operating conditions. Recently, at least some known aircraft components have been fabricated from multi-layer laminate structures of non-metallic composite materials such as carbon-fiber-reinforced polymer (CFRP). Unlike aircraft components fabricated from metallic material, composite components are generally unable to readily conduct away the extreme electrical currents and electromagnetic forces generated by lightning strikes. To ensure flight safety, aircraft implementing composite components may be equipped with lightning strike protection (LSP) features. For example, conductive media can be provided on a surface of or embedded in a composite component to divert electric current away from metallic fasteners or other flight-critical components.

At least some known conductive media are manufactured in a variety of configurations and subsequently provided on the surface of or embedded between plies of the composite component. However, when applied to the surface of the composite component, surface inconsistencies between the conductive media and the composite component may require excess amounts of surfacer material to be applied over the conductive media to ensure the surface of the component is substantially uniform. Moreover, at least some known conductive media are susceptible to other manufacturing issues such as non-uniformity in directional resistivity thereof. At least some known conductive media may also be susceptible to microcracking in at least some CFRP systems. As such, existing methods of manufacturing conductive media for use in lightning strike protection systems may increase the weight or manufacturing times of resulting aircraft, may be difficult to incorporate in the composite component, and/or may have one or more characteristics that facilitate reducing the service life of the composite component.

EP 2704539A1 states in its abstract: a method for producing an aircraft structure component is disclosed the component having an outer skin provided with electric conductor elements. The method comprises the steps of providing an aircraft structure component having an outer skin, applying particles of electrically conductive material onto the outer surface of the outer skin of said aircraft structure component in a predetermined pattern, such that the accumulated particles of electrically conductive material form electric conductor elements along the outer surface of the outer skin, and applying particles of electrically insulating material onto the outer surface of the outer skin of said aircraft structure component in a predetermined pattern, such that the accumulated particles of electrically isolating material form an insulating layer for the electric conductor elements.

US 2009/092844A1 states in its abstract: a method and apparatus for lighting protection. In one advantageous embodiment a method forms a lighting protection system on a composite surface of an aircraft. A dielectric coating is formed on the composite surface in which the dielectric coating covers a metal feature exposed on the composite surface. A metal adhesion promoter is applied in a pattern on the dielectric coating and over additional areas of the composite surface, including a grounding feature to form a metal adhesion promoter layer. A metal coating is formed on the metal adhesion promoter layer to create a path from an area including the metal feature to the grounding feature..

GB 2433467A states in its abstract: an exterior surface protective structure for applications such as an aircraft is formed by providing a surfacer having a resin carrier, a metal mesh material such as an expanded foil or woven metal fabric and an isolator with resin in the surfacer and the isolator filling holes in the metal mesh to form a surface that may be covered with finishes, such as spray applied surfacers, primer(s) and a paint to provide a more robust structure that resists corrosion and prevents substrate microcracking, while providing rain erosion resistance, environmental durability, structural performance, and lightning protection whilst at the same time being lighter weight and less costly to maintain and repair.

It is with respect to these and other considerations that the disclosure made herein is presented.

### BRIEF DESCRIPTION

In one aspect, a method of forming a lightning protection system for use with an aircraft is provided as defined in claim 1.

In another aspect, an apparatus for use in forming a lightning protection system for use with an aircraft is provided as defined in claim 9.

### BRIEF DESCRIPTION OF THE DRAWINGS

FIG. 1 is a flow diagram of an exemplary aircraft production and service method.
FIG. 2 is a block diagram of an exemplary aircraft.
FIG. 3 is a top plan view of an exemplary aircraft.
FIG. 4 is a schematic cross-sectional view of an exemplary component that may be used with the aircraft shown in FIG. 3.
FIG. 5 is a schematic illustration of an exemplary additive manufacturing apparatus for use in forming the lightning protection system shown in FIG. 4.

### DETAILED DESCRIPTION

The implementations described herein relate to an apparatus and methods of forming a lightning protection system for use with aircraft, for example. More specifically, the lightning protection system includes at least one layer of electrically conductive material applied to components of the aircraft via additive manufacturing techniques. Applying the electrically conductive material using additive manufacturing techniques enables a manufacturer to select a location and/or a configuration of the layer to be applied to the aircraft. The material and/or design of the electrically conductive material at different locations along the aircraft is selected to ensure a predetermined amount of lightning protection is provided at the different locations. The apparatus and methods described herein include at least one of a) an ability to print lightning protection features onto predetermined regions of the aircraft based on an amount of desired lightning protection to be provided thereto; b) improving surface uniformity in the layer of electrically conductive material; c) reducing an overall weight of the aircraft by reducing an amount of surfacer to be applied over the now smoother layer of electrically conductive material; d) an ability to print highly immalleable and generally difficult to work with electrically conductive material directly onto the aircraft; e) increasing uniformity in directional resistivity of the layer of electrically conductive material; and f) printing the layer of electrically conductive material in custom designs that facilitate reducing microcracking of the layer, for example. The apparatus and methods described herein may also be used to repair existing lightning protection systems.

As described above, a technical effect of the apparatus and methods described herein is reducing the amount of surfacer to be applied over the layer of electrically conductive material when compared to previously known lightning protection systems. For example, at least some previously known electrically conductive media, such as expanded metal foils, have a roughness and a thickness such that a unit weight of the surfacer material applied over the expanded metal foil is within a range between about 0.03 pounds per square foot and about 0.06 pounds per square foot (about 1.4364 Pa and about 2.8728 Pa), and a thickness within a range between about 0.005 inch and about 0.008 inch (about 0.127 mm and about 0.2032 mm). Applying the electrically conductive material using additive manufacturing techniques will generally facilitate reducing the unit weight of the surfacer material to be applied over the electrically conductive media described herein to within a range between about 0.01 pounds per square foot and about 0.02 pounds per square foot (about 0.4788 Pa and about 0.9576 Pa), and a thickness within a range between about 0.001 inch and about 0.002 inch (about 0.0254 mm and 0.0508 mm). Moreover, in some implementations,
such as when the electrically conductive media is fabricated from a titanium-based material, the surfacer material may be completely omitted.

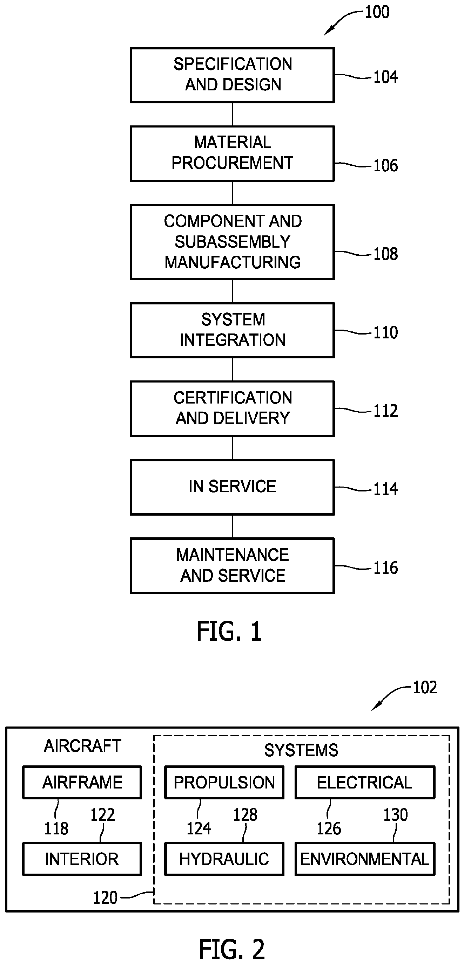

Referring to the drawings, implementations of the disclosure may be described in the context of an aircraft manufacturing and service method 100 (shown in FIG. 1) and via an aircraft 102 (shown in FIG. 2). During pre-production, including specification and design 104 data of aircraft 102 may be used during the manufacturing process and other materials associated with the airframe may be procured 106. During production, component and subassembly manufacturing 108 and system integration 110 of aircraft 102 occurs, prior to aircraft 102 entering its certification and delivery process 112. Upon successful satisfaction and completion of airframe certification, aircraft 102 may be placed in service 114. While in service by a customer, aircraft 102 is scheduled for periodic, routine, and scheduled maintenance and service 116, including any modification, reconfiguration, and/or refurbishment, for example. In alternative implementations, manufacturing and service method 100 may be implemented via platforms other than an aircraft.

Each portion and process associated with aircraft manufacturing and/or service 100 may be performed or completed by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 2, aircraft 102 produced via method 100 may include an airframe 118 having a plurality of systems 120 and an interior 122. Examples of high-level systems 120 include one or more of a propulsion system 124, an electrical system 126, a hydraulic system 128, and/or an environmental system 130. Any number of other systems may be included.

Apparatus and methods embodied herein may be employed during any one or more of the stages of method 100. For example, components or subassemblies corresponding to component and subassembly production process 108 may be fabricated or manufactured in a manner similar to components or subassemblies produced while aircraft 102 is in service 114. Also, one or more apparatus implementations, method implementations, or a combination thereof may be utilized during the production stages 108 and 110, for example, by substantially expediting assembly of, and/or reducing the cost of assembly of aircraft 102. Similarly, one or more of apparatus implementations, method implementations, or a combination thereof may be utilized while aircraft 102 is being serviced or maintained, for example, during scheduled maintenance and service 116.

As used herein, the term "aircraft" may include, but is not limited to only including, airplanes, unmanned aerial vehicles (UAVs), gliders, helicopters, and/or any other object that travels through airspace. Further, in an alternative implementation, the aircraft manufacturing and service method described herein may be used in any manufacturing and/or service operation.

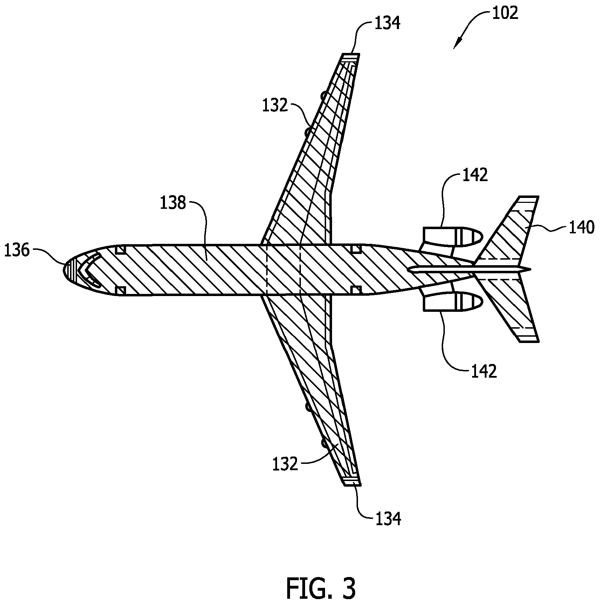

FIG. 3 is a top plan view of aircraft 102. In the exemplary implementation, aircraft 102 includes a plurality of zones such as wing zones 132, wing tip zones 134, a nose zone 136, a fuselage zone 138, a tail zone 140, and engine nacelles 142. As will be described in more detail below, structural components in one or more of these zones include lightning protection features to facilitate reducing damage to aircraft 102 in the event of a lightning strike. Lightning protection features may also be provided in regions of aircraft 102 that house electrically sensitive components.

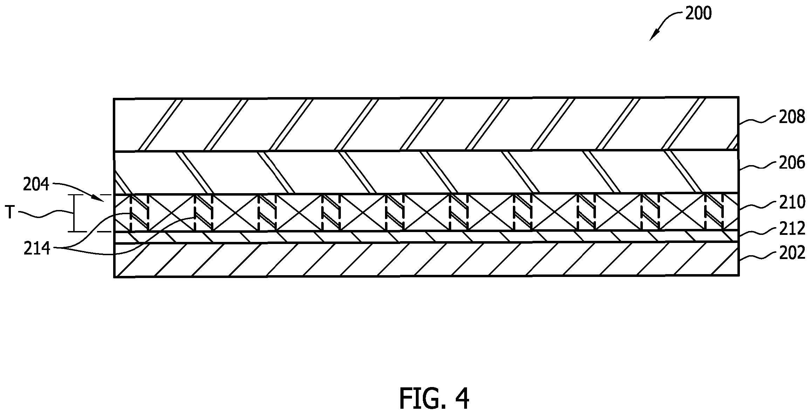

FIG. 4 is a schematic cross-sectional view of an exemplary component 200 that may be used with aircraft 102 (shown in FIG. 3). Component 200 is located in any of zones 132-140 or engine nacelles 142. In the exemplary implementation, component 200 includes a substrate 202, a lightning protection system 204 coupled to substrate 202, a layer 206 of surfacer material applied over lightning protection system 204, and a layer 208 of finishing material applied over layer 206. The finishing material is typically fabricated from a primer/top coat combination, but may also be appliqué, with or without riblets, to improve aerodynamic performance. Lightning protection system 204 includes a layer 210 of electrically conductive material applied, either directly or indirectly, to substrate 202. As will be described in more detail below, in some implementations, a layer 212 of isolator material is positioned between layer 210 and substrate 202.

Substrate 202 may be fabricated from any material that enables component 200 to function as described herein. For example, in the exemplary implementation, substrate 202 is fabricated from at least one ply (not shown) of composite material. Alternatively, substrate 202 is fabricated from a metallic material, and lightning protection system 204 provides additional lightning protection to aircraft 102. Moreover, layer 212 of isolator material may be fabricated from any material that enables component 200 to function as described herein. Specifically, layer 212 is fabricated from material that facilitates reducing galvanic corrosion within component 200. For example, layer 212 is generally implemented when materials used to fabricate substrate 202 and layer 210 have different levels of electrode potential along the Anodic index. The Anodic index is used to determine the likelihood of a material to be anodic or cathodic based on the electrode potential of each material used in a galvanic cell. As such, layer 212 is fabricated from dielectric fibrous materials such as glass, quartz, polyester, nylon, or polyamide impregnated with a dielectric matrix material compatible with the material used to fabricate substrate 202. Layer 212 facilitates reducing galvanic corrosion by separating layer 210 of electrically conductive material from substrate 202. Alternatively, layer 212 may be omitted from component 200 when the materials used to fabricate substrate 202 and layer 210 are galvanically and strain compatible.

As will be described in more detail below, a configuration of layer 210 is selected as a function of an amount of lightning protection to be provided to zones 132-140 or engine nacelles 142 of aircraft 102. More specifically, layer 210 in each zone can have a different configuration based on a desired amount and/or type of lightning protection to be provided thereto. Specifically, configurations that provide a greater amount of lightning protection are generally utilized in critical zones of aircraft 102 such as wing zones 132, which house fuel, zones most susceptible to direct lighting strikes (e.g., wing tip zones 134 and nose zone 136), and zones that house electrically sensitive components. Configurations that provide less lightning protection are generally utilized in zones of aircraft 102 other than the critical zones. The configuration of layer 210 varies based on properties of layer 210 such as at least one of a material used to fabricate layer 210, a thickness T of layer 210, and/or a design of layer 210. Different materials have different levels of electrical conductivity, the amount of lightning protection increases as thickness T increases, and layer 210 can be applied to substrate 202 in various designs as will be described in more detail below. Exemplary materials used to fabricate layer 210 include, but are not limited to, aluminum, copper, brass, nickel, and titanium.

As described above, the amount of lightning protection provided to component 200 is based at least partially on the design of layer 210. Layer 210 includes a plurality of perforations 214 extending therethrough. In some examples, surfacer material may substantially fill perforations 214. Perforations 214 facilitate reducing a weight of layer 210, make layer 210 easier to process and facilitate a mechanical adhesion bond to layer 212 or substrate 202, but also reduce the amount of lightning protection provided to component 200.

Shielding needs provided by lightning protection system 204 may be selected based on systems located underneath lightning protection system 204. For example, wing zones 132 generally include metallic fasteners, and the shielding provided at such zones is selected to prevent lightning sparks from being conducted through the fasteners. As such, substantially solid designs of layer 210 are generally utilized in localized areas of aircraft 102 having multiple electromagnetic effects protection requirements, and non-solid designs (i.e., the perforated pattern or the mesh pattern) of layer 210 are generally utilized in localized areas of aircraft 102 where lightning protection and economic feasibility are desired. For example, it may be cost-effective to apply layer 210 of electrically conductive media with a substantially solid pattern near the fasteners, and then progressively modify the configuration to a perforated pattern away from the fasteners. Moreover, forming layer 210 via additive manufacturing techniques enables a shape of perforations 214 to be selected that facilitates reducing a likelihood of microcracking in layer 210 during the service life of component 200. Specifically, perforations 214 have a substantially rounded outer profile such that stress concentrations of the surfacer material within perforations 214 are reduced when compared to perforations having a sharp corner configuration.

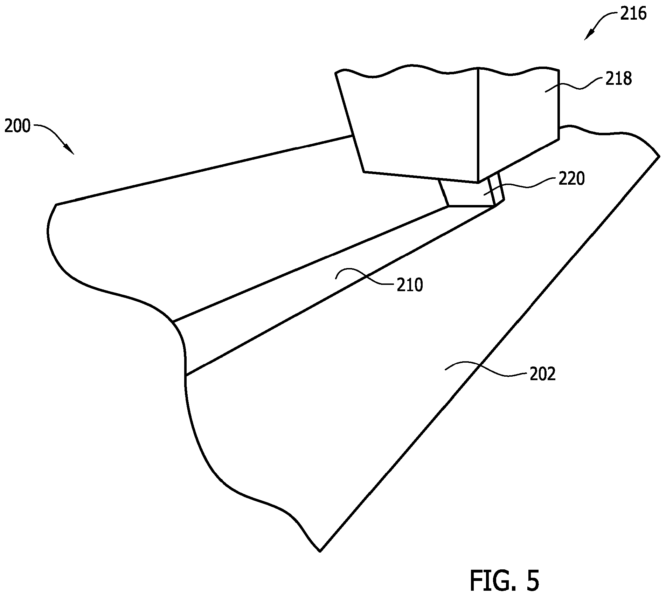

FIG. 5 is a schematic illustration of an exemplary additive manufacturing apparatus 216 for use in forming lightning protection system 204. In the exemplary implementation, apparatus 216 includes an end effector 218 to be coupled to a robotic arm (not shown), for example, and a printing device 220 coupled to end effector 218. In one embodiment, printing device 220 is embodied as a metal paste or slurry printing device that discharges a flow of metal paste or slurry material towards substrate 202 to form layer 210.

In operation, the robotic arm traverses end effector 218 across substrate 202 as printing device 220 applies the metal paste or slurry thereto. Specifically, printing device 220 is capable of applying the metal paste or slurry to substrate 202 in any of the configurations described above (e.g., with any combination of material, thickness, or design). Moreover, printing device 220 can form layer 210 in different configurations at each of zones 132-140 and engine nacelles 142, as described above. Printing device 220 can also form layer 210 in different configurations at different locations along each component 200 in zones 132-140 and engine nacelles 142. As such, a custom designed lightning protection system 204 can be formed along aircraft 102.

In some implementations, printing device 220 forms layer 210 on substrate 202 either before or after aircraft 102 has been assembled. For example, layer 210 can either be formed on each component 200 before being assembled to form aircraft 102, or components 200 can be assembled to form aircraft 102 and layer 210 subsequently applied thereto.

A method of repairing lightning protection system 204 coupled to component 200 is also provided herein. The method includes identifying a damaged portion of lightning protection system 204, selecting a configuration of at least one layer 210 of electrically conductive material to be applied to component 200 at a location of the damaged portion, and applying the at least one layer 210 of electrically conductive material to component 200 via an additive manufacturing technique. The at least one layer 210 is applied by discharging a flow of metal paste or slurry material towards component 200 to form the at least one layer 210. The method also includes selecting the configuration of the at least one layer 210 of electrically conductive material that substantially aligns with undamaged portions of lightning protection system 204 adjacent to the damaged portion.

This written description uses examples to disclose various implementations, including the best mode, and also to enable any person skilled in the art to practice the various implementations, including making and using any devices or systems and performing any incorporated methods. The patentable scope of the disclosure is defined by the claims.

## Claims

1. A method of forming a lightning protection system (204) for use with an aircraft (102), the method using an apparatus (216) comprising an end effector (218) and a printing device (220) coupled to said end effector, said printing device configured to discharge a flow of metal paste or slurry material towards a component to form at least one layer of electrically conductive material thereon, said method comprising:
selecting a configuration of at least one layer of electrically conductive material (210) to be applied to a component (200) of the aircraft, wherein the configuration is selected as a function of an amount of lightning protection to be provided thereto; and
applying, by said printing device, the at least one layer of electrically conductive material to the component via an additive manufacturing technique;
wherein applying, by said printing device, the at least one layer comprises forming, by said printing device, a plurality of perforations (214) in the at least one layer of electrically conductive material, the plurality of perforations having a substantially rounded outer profile, wherein selecting a configuration comprises:
defining a first configuration of the at least one layer of electrically conductive material (210) to be applied to components (200) in critical zones of the aircraft (102); and
defining a second configuration of the at least one layer of electrically conductive material to be applied to components in zones of the aircraft other than the critical zones, wherein the first configuration provides a greater amount of lightning protection than the second configuration.

2. The method in accordance with Claim 1, wherein applying the at least one layer (210) comprises discharging a flow of metal paste or slurry material towards the component (200) to form the at least one layer.

3. The method in accordance with Claims 1 or 2, wherein selecting a configuration comprises selecting at least one of a material, a thickness, or a design of the at least one layer of electrically conductive material (210).

4. The method in accordance with any preceding claim further comprising defining the critical zones of the aircraft (102) that include at least one of zones that house fuel, are most susceptible to lightning strikes, or that house electrically sensitive components.

5. The method in accordance with any preceding Claim further comprising applying at least one layer of surfacer material (206) over the at least one layer of electrically conductive material (210).

6. The method in accordance with any preceding Claim further comprising positioning at least one layer of isolator material (212) between the component (200) and the at least one layer of electrically conductive material (210).

7. The method in accordance with Claim 6, wherein the at least one layer of isolator material (212) separates the at least one layer of electrically conductive material (210) from a substrate (202) of the component (200), wherein the at least one layer of isolator material is fabricated from material that facilitates reducing galvanic corrosion within the component (200).

8. The method in accordance with Claims 7, wherein the at least one layer of isolator material (212) comprises glass, quartz, polyester, nylon, or polyamide impregnated with a dielectric matrix material compatible with a material used to fabricate the substrate (202) of the component (200).

9. An apparatus for use in forming a lightning protection system (204) for use with an aircraft (102), the lightning protection system including at least one layer of electrically conductive material (210) applied to a component (200) of the aircraft, said apparatus comprising:
an end effector (218); and
a printing device (220) coupled to said end effector, said printing device configured to discharge a flow of metal paste or slurry material towards the component to form the at least one layer of electrically conductive material thereon;
wherein said printing device (220) is configured to form the at least one layer of electrically conductive material (210) with a plurality of perforations (214) extending therethrough, the plurality of perforations having a substantially rounded outer profile, wherein said printing device (220) is configured to:
form the at least one layer of electrically conductive material (210) in a first configuration on components (200) at critical zones of the aircraft (102); and
form the at least one layer of electrically conductive material in a second configuration on components at zones of the aircraft other than the critical zones, wherein the first configuration provides a greater amount of lightning protection than the second configuration.

10. The apparatus in accordance with Claim 9, wherein said printing device (220) is configured to form the at least one layer of electrically conductive material (210) in a configuration selected as a function of an amount of lightning protection to be provided to the component (200).

11. The apparatus in accordance with Claims 9 or 10, wherein said printing device (220) is configured to form the at least one layer of electrically conductive material (210) in a configuration selected from properties including at least one of a material, a thickness, or a design of the at least one layer of electrically conductive material.

## Patentansprüche

1. Verfahren zum Ausbilden eines Blitzschutzsystems (204) zur Verwendung bei einem Flugzeug (102), wobei das Verfahren eine Vorrichtung (216) verwendet, die einen Endeffektor (218) und eine Druckvorrichtung (220) aufweist, die mit dem Endeffektor verbunden ist, wobei die Druckvorrichtung dazu konfiguriert ist, einen Fluss von Metallpaste oder breiförmigem Material in Richtung einer Komponente abzugeben, um wenigstens eine Schicht aus elektrisch leitfähigem Material darauf auszubilden, wobei das Verfahren aufweist:
Auswählen einer Konfiguration von wenigstens einer Schicht aus elektrisch leitfähigem Material (210), die auf eine Komponente (200) des Flugzeugs aufzubringen ist, wobei die Konfiguration in Abhängigkeit vom Grad des Blitzschutzes, der dafür bereitgestellt werden soll, ausgewählt wird; und
Aufbringen, durch die Druckvorrichtung, der wenigstens einen Schicht aus elektrisch leitfähigem Material auf die Komponente über eine regenerative Fertigungstechnik;
wobei das Aufbringen der wenigstens einen Schicht durch die Druckvorrichtung das Ausbilden, durch die Druckvorrichtung, einer Vielzahl von Perforationen (214) in der wenigstens einen Schicht aus elektrisch leitfähigem Material aufweist, wobei die Vielzahl von Perforationen ein im Wesentlichen abgerundetes Außenprofil haben, wobei das Auswählen einer Konfiguration aufweist:
Definieren einer ersten Konfiguration der wenigstens einen Schicht aus elektrisch leitfähigem Material (210), die auf Komponenten (200) in kritischen Bereichen des Flugzeugs (102) aufzubringen ist; und
Definieren einer zweiten Konfiguration der wenigstens einen Schicht aus elektrisch leitfähigem Material, die auf Komponenten in Bereichen des Flugzeugs außer den kritischen Bereichen aufzubringen ist, wobei die erste Konfiguration einen größeren Grad an Blitzschutz bereitstellt als die zweite Konfiguration.

2. Verfahren nach Anspruch 1, wobei das Aufbringen der wenigstens einen Schicht (210) das Abgeben eines Flusses von Metallpaste oder breiförmigem Material in Richtung der Komponente (200) aufweist, um die wenigstens eine Schicht auszubilden.

3. Verfahren nach Anspruch 1 oder 2, wobei das Auswählen einer Konfiguration das Auswählen von wenigstens einem aufweist von einem Material, einer Dicke oder einem Design der wenigstens einen Schicht aus elektrisch leitfähigem Material (210).

4. Verfahren nach einem der vorhergehenden Ansprüche, das des Weiteren das Definieren kritischer Bereiche des Flugzeugs (102) aufweist, die wenigstens eines aufweisen von Bereichen, die Treibstoff beherbergen, sehr anfällig für Blitzschlag sind, oder elektrisch sensitive Komponenten beherbergen.

5. Verfahren nach einem der vorhergehenden Ansprüche, das des Weiteren das Aufbringen wenigstens einer Schicht von Spachtelmaterial (206) über der wenigstens einen Schicht von elektrisch leitfähigem Material (210) aufweist.

6. Verfahren nach einem der vorhergehenden Ansprüche, das des Weiteren das Positionieren wenigstens einer Schicht aus Isoliermaterial (212) zwischen der Komponente (200) und der wenigstens einen Schicht aus elektrisch leitfähigem Material (210) aufweist.

7. Verfahren nach Anspruch 6, wobei die wenigstens eine Schicht aus Isoliermaterial (212) die wenigstens eine Schicht aus elektrisch leitfähigem Material (210) von einem Substrat (202) der Komponente (200) trennt, wobei die wenigstens eine Schicht aus Isoliermaterial aus Material hergestellt ist, das das Verringern galvanischer Korrosion in der Komponente (200) erleichtert.

8. Verfahren nach Anspruch 7, wobei die wenigstens eine Schicht aus Isoliermaterial (212) Glas, Quarz, Polyester, Nylon oder Polyamid imprägniert mit einem dielektrischen Matrixmaterial aufweist, das mit einem Material kompatibel ist, das verwendet wird, um das Substrat (202) der Komponente (200) herzustellen.

9. Vorrichtung zur Verwendung bei der Ausbildung eines Blitzschutzsystems (204) zur Verwendung bei einem Flugzeug (102), wobei das Blitzschutzsystem wenigstens eine Schicht aus elektrisch leitfähigem Material (210) aufweist, das auf eine Komponente (200) des Flugzeugs aufgebracht wird, wobei die Vorrichtung aufweist:
einen Endeffektor (218); und
eine Druckvorrichtung (220), die mit dem Endeffektor verbunden ist, wobei die Druckvorrichtung dazu konfiguriert ist, einen Fluss von Metallpaste oder breiförmigem Material in Richtung der Komponente abzugeben, um die wenigstens eine Schicht aus elektrisch leitendem Material darauf auszubilden;
wobei die Druckvorrichtung (220) dazu konfiguriert ist, die wenigstens eine Schicht aus elektrisch leitfähigem Material (210) mit einer Vielzahl von Perforationen (214) auszubilden, die sich dort hindurch erstrecken, wobei die Vielzahl von Perforationen ein im Wesentlichen abgerundetes Außenprofil haben, wobei die Druckvorrichtung (220) konfiguriert ist zum:
Ausbilden der wenigstens einen Schicht aus elektrisch leitfähigem Material (210) in einer ersten Konfiguration auf Komponenten (200) an kritischen Bereichen des Flugzeugs (102); und
Ausbilden der wenigstens einen Schicht aus elektrisch leitfähigem Material in einer zweiten Konfiguration auf Komponenten an Bereichen des Flugzeugs außer den kritischen Bereichen, wobei die erste Konfiguration einen größeren Grad an Blitzschutz bereitstellt als die zweite Konfiguration.

10. Vorrichtung nach Anspruch 9, wobei die Druckvorrichtung (220) dazu konfiguriert ist, die wenigstens eine Schicht aus elektrisch leitfähigem Material (210) in einer Konfiguration auszubilden, die in Abhängigkeit eines Grads an Blitzschutz ausgewählt wird, der für die Komponente (200) bereitzustellen ist.

11. Vorrichtung nach Anspruch 9 oder 10, wobei die Druckvorrichtung (220) dazu konfiguriert ist, die wenigstens eine Schicht aus elektrisch leitfähigem Material (210) in einer Konfiguration auszubilden, die ausgewählt wird aus Eigenschaften, welche wenigstens eines aufweisen von einem Material, einer Dicke oder einem Design der wenigstens einen Schicht aus elektrisch leitfähigem Material.

## Revendications

1. Procédé de formation d'un système de protection contre la foudre (204), ledit système étant prévu pour une utilisation avec un avion (102), le procédé utilisant un appareil (216) comprenant un effecteur (218) et un dispositif d'impression (220) couplé audit effecteur, ledit dispositif d'impression étant configuré pour évacuer, vers un composant, un flux de pâte métallique ou d'un matériau en suspension, afin de former, sur ledit composant, au moins une couche de matériau électroconducteur, ledit procédé comprenant :
la sélection d'une configuration d'au moins une couche de matériau électroconducteur (210) devant être appliquée sur un composant (200) de l'avion,
procédé dans lequel la configuration est sélectionnée en fonction de l'importance de la protection, contre la foudre, devant être fournie audit composant ; et
l'application sur le composant, par ledit dispositif d'impression, de l'au moins une couche de matériau électroconducteur, par une technique de fabrication additive ;
procédé dans lequel, l'application, par ledit dispositif d'impression, de l'au moins une couche, comprend la formation, par ledit dispositif d'impression, d'une pluralité de perforations (214) dans l'au moins une couche de matériau électroconducteur, la pluralité de perforations ayant un profil extérieur pratiquement arrondi, procédé dans lequel la sélection d'une configuration comprend :
la définition d'une première configuration de l'au moins une couche de matériau électroconducteur (210) devant être appliquée sur des composants (200), dans des zones critiques de l'avion (102) ; et
la définition d'une seconde configuration de l'au moins une couche de matériau électroconducteur devant être appliquée sur des composants, dans des zones de l'avion autres que les zones critiques, procédé dans lequel la première configuration fournit une protection, contre la foudre, plus grande que celle de la seconde configuration.

2. Procédé selon la revendication 1, dans lequel l'application de l'au moins une couche (210) comprend l'évacuation, vers le composant (200), d'un flux de pâte métallique ou d'un matériau en suspension, afin de former l'au moins une couche.

3. Procédé selon les revendications 1 ou 2, dans lequel la sélection d'une configuration comprend la sélection d'au moins l'un ou l'autre d'un matériau, d'une épaisseur ou d'une conception de l'au moins une couche de matériau électroconducteur (210).

4. Procédé selon l'une quelconque des revendications précédentes, comprenant en outre la définition des zones critiques de l'avion (102), zones qui englobent au moins une des zones qui abritent du carburant et sont les plus sensibles aux impacts de foudre, ou bien zones qui abritent des composants électriquement sensibles.

5. Procédé selon l'une quelconque des revendications précédentes, comprenant en outre l'application d'au moins une couche de matériau de surfaçage (206) par-dessus l'au moins une couche de matériau électroconducteur (210).

6. Procédé selon l'une quelconque des revendications précédentes, comprenant en outre le positionnement d'au moins une couche de matériau isolant (212) entre le composant (200) et l'au moins une couche de matériau électroconducteur (210).

7. Procédé selon la revendication 6, dans lequel l'au moins une couche de matériau isolant (212) sépare l'au moins une couche de matériau électroconducteur (210), d'un substrat (202) du composant (200), procédé dans lequel l'au moins une couche de matériau isolant est fabriquée à partir d'un matériau qui facilite la réduction de la corrosion galvanique à l'intérieur du composant (200).

8. Procédé selon la revendication 7, dans lequel l'au moins une couche de matériau isolant (212) comprend du verre, du quartz, du polyester, du nylon, ou bien un polyamide imprégné d'un matériau à matrice diélectrique, ledit matériau étant compatible avec un matériau utilisé pour fabriquer le substrat (202) du composant (200).

9. Appareil utilisé dans la formation d'un système de protection contre la foudre (204), ledit système étant prévu pour une utilisation avec un avion (102), le système de protection contre la foudre comprenant au moins une couche de matériau électroconducteur (210) appliquée sur un composant (200) de l'avion, ledit appareil comprenant :
un effecteur (218) ; et
un dispositif d'impression (220) couplé audit effecteur, ledit dispositif d'impression étant configuré pour évacuer, vers le composant, un flux de pâte métallique ou d'un matériau en suspension, afin de former, sur ledit composant, l'au moins une couche de matériau électroconducteur ;
procédé dans lequel ledit dispositif d'impression (220) est configuré pour former l'au moins une couche de matériau électroconducteur (210) avec une pluralité de perforations (214) s'étendant à travers ladite couche de matériau, la pluralité de perforations ayant un profil extérieur pratiquement arrondi, procédé dans lequel ledit dispositif d'impression (220) est configuré pour :
former, dans une première configuration, l'au moins une couche de matériau électroconducteur (210) sur des composants (200), au niveau de zones critiques de l'avion (102) ; et
former, dans une seconde configuration, l'au moins une couche de matériau électroconducteur sur des composants, au niveau de zones de l'avion autres que les zones critiques, procédé dans lequel la première configuration fournit une protection, contre la foudre, plus grande que celle de la seconde configuration.

10. Appareil selon la revendication 9, dans lequel ledit dispositif d'impression (220) est configuré pour former l'au moins une couche de matériau électroconducteur (210) dans une configuration sélectionnée en fonction de l'importance de la protection, contre la foudre, devant être fournie au composant (200).

11. Appareil selon les revendications 9 ou 10, dans lequel ledit dispositif d'impression (220) est configuré pour former l'au moins une couche de matériau électroconducteur (210), dans une configuration sélectionnée parmi des propriétés comprenant au moins l'une de celles d'un matériau, d'une épaisseur ou d'une conception de l'au moins une couche de matériau électroconducteur.
